Europäisches Patentamt

European Patent Office

Office européen des brevets

(19)

(11) Veröffentlichungsnummer: **0 214 380**
**A2**

(12) **EUROPÄISCHE PATENTANMELDUNG**

(21) Anmeldenummer: **86108161.0**

(22) Anmeldetag: **14.06.86**

(51) Int. Cl.⁴: **B 01 D 53/36**
**B 01 J 23/74, B 01 J 27/185**
**B 01 J 37/00**

(30) Priorität: **05.09.85 DE 3531651**

(43) Veröffentlichungstag der Anmeldung:
**18.03.87 Patentblatt 87/12**

(84) Benannte Vertragsstaaten:
**AT BE CH DE FR GB IT LI LU NL SE**

(71) Anmelder: **DIDIER-WERKE AG**
**Lessingstrasse 16-18**
**D-6200 Wiesbaden(DE)**

(71) Anmelder: **Didier Engineering GmbH**
**Alfredstrasse 28 Postfach 10 09 45**
**D-4300 Essen 1(DE)**

(72) Erfinder: **Flockenhaus, Claus, Prof. Dr.**
**Tersteegenweg 16**
**D-4300 Essen 1(DE)**

(72) Erfinder: **Grimm, Daniel**
**Hauptstrasse 10**
**D-6229 Schlangenbad-Bärstadt(DE)**

(72) Erfinder: **Kainer, Hartmut, Dr.**
**Sauerbruchstrasse 1a**
**D-6200 Wiesbaden 12(DE)**

(72) Erfinder: **Laue, Karl-Heinrich**
**Bergische Strasse 41**
**D-4320 Hattingen 16(DE)**

(74) Vertreter: **Brückner, Raimund**
**c/o Didier-Werke AG Lessingstrasse 16-18**
**D-6200 Wiesbaden(DE)**

(54) Katalysatorplatte.

(57) Die Erfindung bezieht sich auf eine Katalysatorplatte für die Stickoxidreduzierung in Abgasen, welche aus körnigem $Fe_2O_3$-Katalysatormaterial und einem Bindemittel gepreßt ist. Zur Erzielung hoher Aktivität und Festigkeit der Platte wird vorgeschlagen, daß sie als Preßkörper aus einem Gemenge einer ersten Mischung und einer davon getrennt hergestellten zweiten Mischung ausgebildet ist, wobei die erste Mischung $Fed22O_3$-Katalysatormaterial und Phosphorsäure als Bindemittel und die zweite Mischung $Fe_2O_3$-Katalysatormaterial und Schwefelsäure als Bindmittel enthält, oder daß die Platte als aus Schichten bestehender Preßkörper ausgebildet ist, wobei die Schichten abwechselnd aus der gennanten ersten Mischung und der genannten zweiten Mischung bestehen.

_**Fig. 2**_

O $H_3PO_4$

O $H_2SO_4$

EP 0 214 380 A2

Bezeichnung: "Katalysatorplatte"

Anmelder: DIDIER-WERKE AG
Lessingstraße 16 - 18
6200 Wiesbaden

und

DIDIER ENGINEERING GMBH
Alfredstraße 28
4300 Essen 1

B e s c h r e i b u n g:

Die Erfindung bezieht sich auf eine Katalysatorplatte für die Stickoxidreduzierung in Abgasen, welche aus körnigem $Fe_2O_3$-Katalysatormaterial und einem Bindemittel gepreßt ist.

Es ist bereits versucht worden, $Fe_2O_3$-Katalysatormaterialplatten unter Verwendung von Schwefelsäure oder Phosphorsäure als Bindemittel herzustellen, gemäß P 35 05 648.7. Dabei hat sich gezeigt, daß nur die Schwefelsäurebindung zu einer hohen Aktivität, dafür aber zu großer Wasserempfindlichkeit führt, wodurch die Platten durch Wasseraufnahme weich werden. Umgekehrt mindert die Phosphorsäurebindung die Aktivität, führt aber andererseits zu harten und nicht wasserempfindlichen Platten. Mischungen von Phosphorsäure und Schwefelsäure führen zu einer nicht immer befriedigenden Katalysatorwirkung. Auch die Tränkung von mit Phosphorsäure gebundenen Katalysatorplatten mit Schwefelsäure und umgekehrt führt nur zu mäßigen Ergebnissen.

Aufgabe der vorliegenden Erfindung ist es daher, eine Katalysatorplatte der eingangs genannten Art zu schaffen, welche hohe Aktivität mit guter Festigkeit und geringer Wasserempfindlichkeit verbindet.

2

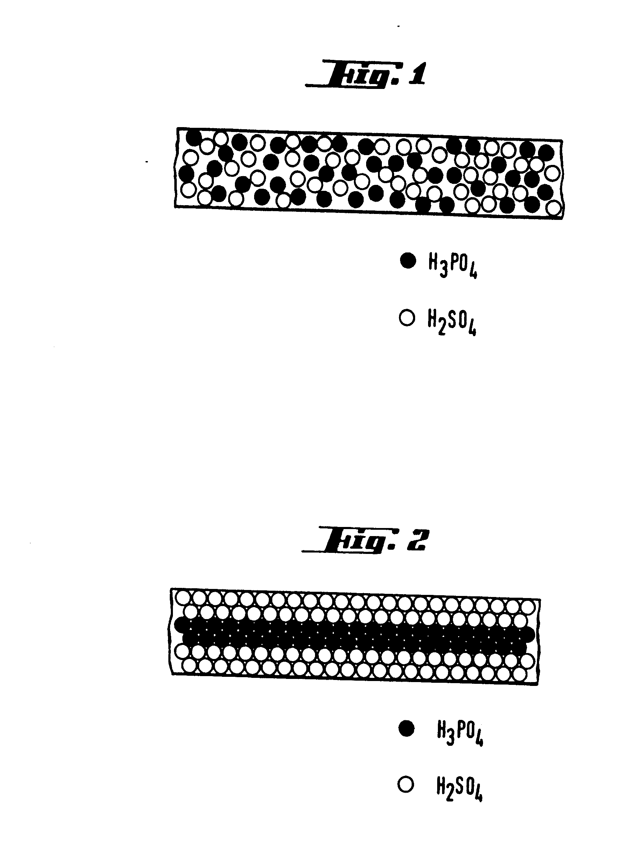

Die erfindungsgemäße Lösung dieses Problems besteht gemäß einem Erfindungsvorschlag darin, daß die Katalysatorplatte als Preßkörper aus einem Gemenge einer ersten Mischung und einer davon getrennt hergestellten zweiten Mischung gebildet ist, wobei die erste Mischung $Fe_2O_3$-Katalysatormaterial und Phosphorsäure als Bindemittel und die zweite Mischung $Fe_2O_3$-Katalysatormaterial und Schwefelsäure als Bindemittel enthält (Fig. 1). Hierdurch entstehen trotz der eingangs geschilderten Umstände erstaunlicherweise wasserfeste Katalysatorplatten, die hohe Aktivität zeigen. Die Katalysatorplatten haben den Vorteil eines homogenen Katalysatorgemenges und zeigen einen hinreichenden Abrieb, der bei Katalysatorplatten erwünscht ist.

Ferner hat sich gezeigt, daß eine Katalysatorplatte hoher Festigkeit und Aktivität unter Verwendung des gleichen Lösungsprinzips dadurch hergestellt werden kann, daß sie als aus Schichten bestehender Preßkörper ausgebildet ist, wobei die Schichten abwechselnd aus einer ersten Mischung aus $Fe_2O_3$-Katalysatormaterial und Phosphorsäure als Bindemittel und aus einer zweiten davon getrennt hergestellten Mischung aus $Fe_2O_3$-Katalysatormaterial und Schwefelsäure als Bindmittel besteht (Fig. 2).

Dabei ist vorteilhafterweise jeweils die Außenschicht aus der zweiten Mischung, als aus $Fe_2O_3$-Katalysatormaterial und Schwefelsäure als Bindemittel hergestellt. Wegen diesen schwefelsäuregebundenen Außenschichten und der dadurch bedingten Weichheit läßt sich ein Abrieb beim Betrieb bewußt herbeiführen.

Bezeichnung: "Katalysatorplatte"

Anmelder:   DIDIER-WERKE AG
            Lessingstraße 16 - 18
            6200 Wiesbaden


        und


            DIDIER ENGINEERING GMBH
            Alfredstraße 28
            4300 Essen 1


P a t e n t a n s p r ü c h e :

1. Katalysatorplatte für die Stickoxidreduzierung in Abgasen, welche aus körnigem $Fe_2O_3$-Katalysatormaterial und einem Bindemittel gepreßt ist, dadurch gekennzeichnet, daß sie als Preßkörper aus einem Gemenge einer ersten Mischung und einer davon getrennt hergestellten zweiten Mischung ausgebildet ist, wobei die erste Mischung $Fe_2O_3$-Katalysatormaterial und Phosphorsäure als Bindemittel und die zweite Mischung $Fe_2O_3$-Katalysatormaterial und Schwefelsäure als Bindmittel enthält.


2. Katalysatorplatte nach Anspruch 1, dadurch gekennzeichnet, daß sie als aus Schichten bestehender Preßkörper ausgebildet ist, wobei die Schichten abwechselnd aus einer ersten Mischung aus $Fe_2O_3$-Katalysatormaterial und Phosporsäure als Bindemittel und aus einer zweiten davon getrennt hergestellten Mischung aus $Fe_2O_3$-Katalysatormaterial und Schwefelsäure als Bindemittel besteht.


3. Katalysatorplatte nach Anspruch 1, dadurch gekennzeichnet, daß jeweils die Außenschicht aus der zweiten Mischung besteht.

0 214 380

## Fig. 1

● H₃PO₄

○ H₂SO₄

## Fig. 2

● H₃PO₄

○ H₂SO₄